# FASCICULE DE BREVET EUROPEEN

(11) **EP 2 590 150 B1**
(45) Date de publication et mention de la délivrance du brevet: **28.10.2015**
(21) Numéro de dépôt: 13153718.5
(22) Date de dépôt: 02.02.2012
(51) Int. Cl.: G08C 17/02, G06F 3/038

(54) **Procédé et dispositif de contrôle d'au moins un appareil par au moins un autre appareil, système mettant en oeuvre un tel dispositif.**
Verfahren und System zur Überwachung mindestens eines Geräts durch mindestens ein anderes Gerät, System, bei dem diese Vorrichtung eingesetzt wird
Method and device for controlling at least one apparatus with at least one other apparatus, system using such a device

(30) Priorité: 09.05.2011 FR 1153966
(43) Date de publication de la demande: 08.05.2013
(62) Demande divisionnaire de: 12707853.3
(73) Titulaire: Archos, 91430 Igny (FR)
(72) Inventeur: Caron, François, 78150 Le Chesnay (FR); Bernard de Courville, Marc, 75014 Paris (FR); Mallart, Raul, 75012 Paris (FR)
(74) Mandataire: Pontet Allano & Associes

(56) Documents cités:
- US-A1- 2009 285 443

## Description

### Domaine technique

La présente invention concerne un procédé et un dispositif de contrôle d'au moins un appareil, dit esclave, par au moins un autre appareil, dit maître. Elle concerne aussi un système mettant oeuvre un tel dispositif de contrôle. Le domaine de l'invention est, de manière non limitative, celui des interfaces utilisateur et plus particulièrement le domaine du contrôle à distance d'une interface tactile à l'aide d'un écran auxiliaire tactile.

### Etat de la technique antérieure

Le contexte de l'invention est celui des interfaces utilisateur tactiles et celui des télécommandes sans fil pour équipement audio et/ou visuels, par exemple une télévision.
De plus en plus d'équipements utilisent des interfaces utilisateur sur écran tactile. Ceci est particulièrement vrai dans le cas des téléphones mobiles mais également dans celui des tablettes multimédia ou de certain PC.
La particularité de ces interfaces par rapport aux interfaces utilisateur basées sur une souris est qu'il n'y a pas besoin d'afficher un curseur sur un écran tactile. En effet, dans le cas d'une interface avec souris, l'affichage du curseur est rendu nécessaire par le fait que la souris se déplace sur une surface qui n'est pas l'écran et que l'oeil de l'utilisateur est partie intégrante de la boucle de contrôle. Ceci donne à l'utilisateur un retour visuel de la position de la souris. Dans le cas d'un écran tactile, ce retour visuel est inutile car c'est le doigt de l'utilisateur qui touche l'écran : il s'agit d'une situation naturelle de visée directe. Les interfaces utilisateur sur écran tactile ne sont donc pas développées pour afficher un curseur.
L'invention se situe également dans un contexte où un objet multimédia mobile tel qu'un téléphone ou une tablette peut avoir une capacité de stockage importante et peut servir pour se connecter à des serveurs de contenus ou à Internet. Par ailleurs, l'écran de ces équipements étant en général de petite dimension, en comparaison avec un écran de télévision, il est naturel de vouloir les connecter à un écran de plus grande dimension de façon à bénéficier d'un meilleur confort visuel ou pour visualiser le contenu à plusieurs. A cet effet, ces appareils portables sont parfois équipés de moyens de connexion à une télévision, tel qu'une sortie HDMI. Ces connexions sont le plus souvent mais pas uniquement filaires.
Une autre particularité des interfaces à écran tactile est la proximité nécessaire entre l'écran et l'utilisateur. Cette proximité peut se définir par une distance maximale qu'est la longueur du bras de l'utilisateur.
Il se pose alors un problème du contrôle à distance de l'équipement à écran tactile lorsque cet équipement est connecté par une connexion filaire à un autre équipement, par exemple une télévision. En effet, cet équipement doit être posé près de la télévision et l'utilisateur se trouve à distance, par exemple sur un canapé.
Les moyens de contrôle à distance selon l'état de l'art sont des souris sans fil, des télécommandes à pavé tactile ou encore des télécommandes avec écran tactile. Ces solutions permettent de contrôler un curseur sur l'écran (souris et pavé tactile) ou d'afficher une interface utilisateur qui est adaptée au contexte applicatif envisagé. Par exemple, pour contrôler une application de diaporama, une interface utilisateur peut être affichée à l'écran avec des contrôles spécialisés (image suivante, précédente, volume, pause, ...).
Cet état de l'art est limitatif dans le sens où l'appareil à contrôler ne connait pas la notion de curseur à l'écran. De plus, c'est un appareil programmable qui peut exécuter un nombre quasiment infini d'applications différentes, qui de ce fait ne peuvent être prévues à l'avance lors de la conception de la télécommande et des interfaces spécialisées. Enfin, il est illusoire d'espérer que toute application développée pour les tablettes aura une interface transportable sur la télécommande.

Un but de la présente invention est de proposer un procédé et un dispositif de contrôle d'un appareil, dit esclave, par un appareil, dit maître, tactile permettant de contrôler une application exécutée par l'appareil esclave depuis l'appareil maître même si cette application n'a pas été conçue pour fonctionner avec cet appareil maître.

Un exemple d'un tel procédé et dispositif est décrit dans le document US 2009/0285443.
Un but de la présente invention est de proposer un procédé et un dispositif de contrôle d'un appareil, dit esclave, par un appareil, dit maître, tactile ne nécessitant pas un transfert ou une simulation de l'interface utilisateur de l'appareil esclave au niveau de l'appareil maître.
Un autre but de la présente invention est de proposer un procédé et un dispositif de contrôle d'un appareil esclave par un appareil maître tactile plus facile et plus rapide à utiliser que les procédés et dispositifs actuels.
Un autre but de la présente invention est de proposer un procédé et un dispositif de contrôle d'un appareil esclave par un appareil maître tactile nécessitant moins de ressources que les procédés et dispositifs actuels.

### Exposé de l'invention

On atteint au moins l'un des objectifs précités avec un dispositif pour contrôler au moins un appareil, dit esclave, par au moins un appareil, dit maître, comprenant une interface utilisateur tactile, ledit dispositif étant caractérisé en ce qu'il comprend :
- des premiers moyens de transmission d'au moins une image, dite de contrôle, générée par l'au moins un appareil esclave audit au moins un appareil maître pour affichage de l'au moins une image de contrôle sur ledit au moins un appareil maître ;
- des deuxièmes moyens de transmission, dudit au moins un appareil maître vers ledit au moins un appareil esclave, d'au moins une coordonnée d'au moins une sélection tactile réalisée sur ledit au moins un appareil maître par rapport audit au moins une image de contrôle ; et
- des moyens de traitement pour interpréter ladite au moins une sélection tactile au niveau dudit au moins un appareil esclave en fonction de ladite au moins une coordonnée.

Ainsi, le dispositif selon l'invention permet de contrôler un appareil esclave par un appareil maître sans avoir à transférer une interface utilisateur de l'appareil esclave ou d'une application exécutée par l'appareil esclave. Le dispositif selon l'invention permet donc de contrôler depuis l'appareil maître n'importe quelle application exécutée au niveau de l'appareil esclave même si cette application n'est pas conçue pour être exécutée par l'appareil maître.

En outre, le dispositif selon l'invention permet de réaliser une sélection tactile interprétée par l'appareil esclave sans avoir à simuler un dispositif de pointage tel qu'une souris, puisque la sélection se fait tactilement et directement par rapport à une image affichée au niveau de l'appareil esclave. Le dispositif selon l'invention est donc plus facile et plus rapide à utiliser que les dispositifs de l'état de la technique.
En outre, n'ayant pas à simuler un dispositif de pointage, le dispositif selon l'invention est moins gourmand en ressource en comparaison avec les dispositifs de l'état de la technique.

Bien entendu l'image de contrôle est affichée sur l'appareil maître sur une interface tactile en vue de réaliser une sélection tactile par rapport à cette image. L'image de contrôle n'est pas forcément affichée par l'appareil esclave.

Le dispositif selon l'invention peut en outre comprendre des moyens de détermination d'au moins une coordonnée d'une sélection tactile réalisée sur l'au moins un appareil maître par rapport à l'au moins une image de contrôle.

Le dispositif selon l'invention peut en outre comprendre :
- des troisièmes moyens de transmission de l'au moins un appareil maître à l'au moins un appareil esclave de la valeur d'au moins une grandeur physique déterminée par un capteur de l'appareil maître, et
- des moyens de traitement pour interpréter ladite au moins une grandeur physique au niveau dudit au moins un appareil esclave.
Le capteur de l'appareil maître peut être un capteur physique ou un capteur logiciel.
Dans une version particulière, les troisièmes moyens de transmissions peuvent être les mêmes que les seconds moyens de transmissions.

Avantageusement, l'au moins une image de contrôle peut comprendre une image générée par l'au moins un appareil esclave pour affichage par ledit au moins un appareil esclave, le dispositif selon l'invention comprenant en outre des moyens de capture d'écran de l'au moins un appareil esclave.

Au moins une image de contrôle peut comprendre une représentation visuelle d'au moins une fonction accessible sur l'au moins un appareil esclave de manière non tactile. Une fonction accessible de manière non tactile peut par exemple être une fonction générée par un bouton physique présent sur l'appareil esclave.

Dans une version particulière, le dispositif selon l'invention peut en outre comprendre des moyens d'appariement sécurisant la connexion dudit au moins un appareil maître et dudit au moins un appareil esclave. Ces moyens d'appariement peuvent permettre d'empêcher une connexion non désirée par un appareil tiers à l'un et/ou l'autre des appareils maître et esclave.

De préférence :
- les premiers moyens de transmission,
- les moyens de détermination d'une coordonnée d'une sélection tactile,
- les deuxièmes moyens de transmission, et
- les moyens de traitement sont agencés pour être mis en oeuvre selon une périodicité prédéterminée. Cette périodicité peut par exemple être de 5 images par secondes.

Dans une version avantageuse, le dispositif selon l'invention peut en outre comprendre des moyens de traitement d'image réalisant un traitement de l'au moins une image de contrôle avant transmission audit au moins un appareil maître. L'image de contrôle transmise à l'appareil maître est dans ce cas l'image de contrôle traitée.
Les moyens de traitement peuvent être agencés pour réaliser une mise à l'échelle et/ou un sous échantillonnage.

Le dispositif selon l'invention peut en outre comprendre :
- des moyens de compression réalisant une compression de l'au moins une image de contrôle avant transmission à l'au moins un appareil maître ; et
- des moyens de décompression réalisant une décompression de l'au moins une image de contrôle compressée reçue par l'au moins un appareil maître.
Dans ce cas, l'image de contrôle transmise à l'appareil maître est l'image de contrôle compressée

Dans une version particulière du dispositif selon l'invention, les moyens de transmission comprennent des moyens de transmission sans fil.
De préférence, les moyens de transmission sans fil sont sécurisés. Cela permet d'empêcher une connexion non désirée par un appareil tiers à l'un et/ou l'autre des appareils maître et esclave.

Selon un autre aspect de l'invention, il est proposé un procédé de contrôle d'au moins un appareil, dit esclave, par au moins un appareil, dit maître, comprenant une interface utilisateur tactile, ledit procédé étant caractérisé en ce qu'il comprend les étapes suivantes :
- transmission d'au moins une image de contrôle générée par l'au moins un appareil esclave audit au moins un appareil maître pour affichage de l'au moins une image de contrôle sur ledit au moins un appareil maître,
- transmission dudit au moins un appareil maître audit au moins un appareil esclave, d'au moins une coordonnée d'au moins une sélection tactile réalisée sur ledit au moins un appareil maître par rapport à l'au moins une image de contrôle, et
- traitement de ladite au moins une sélection au niveau dudit au moins un appareil esclave en fonction de ladite au moins une coordonnée.

Le procédé selon l'invention peut en outre comprendre une étape de détermination d'au moins une coordonnée d'au moins une sélection tactile réalisée sur ledit au moins un appareil maître par rapport à l'au moins une image de contrôle.

L'image de contrôle est bien entendu affichée sur ledit appareil maître sur une interface tactile.
L'image de contrôle peut être obtenue à partir d'une image réellement affichée sur l'appareil esclave. Dans ce cas, l'image de contrôle peut être obtenue par une capture d'écran d'un écran de l'appareil esclave ou une copie d'une mémoire graphique, ou d'une mémoire d'une carte graphique de l'appareil esclave.
L'image de contrôle peut être obtenue à partir d'une image générée par l'appareil esclave sans être affichée. Dans ce cas, l'image de contrôle peut être obtenue par une copie d'une mémoire graphique, ou d'une mémoire d'une carte graphique de l'appareil esclave.

Le procédé selon l'invention peut en outre comprendre une étape de mesure durant laquelle une grandeur physique est captée par un capteur de l'appareil maître.
Le capteur peut être un capteur physique ou un capteur logiciel.
Le procédé peut comprendre en outre une étape de transmission, de l'au moins un appareil maître vers l'au moins un appareil esclave, d'au moins une valeur d'au moins une grandeur physique et une étape de traitement pour interpréter ladite au moins une grandeur physique au niveau dudit au moins un appareil esclave.

De préférence, cette étape de transmission peut être comprise dans ou réalisée avant, après ou en même temps que l'étape de transmission d'au moins une coordonnée.

Avantageusement, l'au moins une image peut comprendre une image générée par l'au moins un appareil esclave pour affichage par ledit au moins un appareil esclave, le procédé selon l'invention comprenant en outre une étape de capture d'un écran d'affichage de l'appareil esclave.

Au moins une image de contrôle peut avantageusement comprendre une représentation visuelle d'au moins une fonction accessible sur l'appareil esclave de manière non tactile. Une fonction accessible de manière non tactile peut par exemple être une fonction générée par un bouton physique présent sur l'appareil esclave. Ainsi, le procédé selon l'invention permet de déporter à distance une fonction non tactile de l'appareil esclave.

Dans une version avantageuse le procédé selon l'invention peut en outre comprendre une étape préliminaire d'appariement sécurisant la connexion desdits au moins un appareil maître et au moins un appareil esclave. Cette étape d'appariement peut permettre d'empêcher une connexion non désirée par un appareil tiers à l'un ou/et l'autre des appareils maître et esclave.

Le procédé peut comprendre en outre une étape de notification précédent une étape de première communication, au cours de laquelle une notification visuelle et/ou sonore est générée pour indiquer que l'au moins un appareil maître et l'au moins un appareil esclave sont appariés. Une notification peut-être générée par l'au moins un appareil maître et/ou l'au moins un appareil esclave. Une notification visuelle peut être affichée sur l'écran de l'appareil maître et/ou un écran de l'appareil esclave. Une notification sonore peut-être émise par un périphérique audio de l'appareil maître et/ou de l'appareil esclave.

De préférence, les étapes de :
- transmission de l'au moins une image de contrôle de l'au moins un appareil esclave à l'appareil maître, et
- d'affichage de ladite au moins une image de contrôle sur l'appareil maître ;
sont réalisées selon une périodicité prédéterminée. Cette périodicité peut par exemple être de 5 images de contrôle par secondes.

Le procédé selon l'invention peut comprendre en outre une étape de traitement d'image réalisant un traitement de l'au moins une image de contrôle avant l'étape de transmission de ladite image audit au moins un appareil maître. L'image de contrôle transmise à l'appareil maître est l'image de contrôle traitée.

Le traitement réalisé peut être une mise à l'échelle et/ou un sous échantillonnage.

Le procédé selon l'invention peut comprendre en outre :
- une étape de compression réalisant une compression de l'au moins une image de contrôle avant l'étape de transmission ; et
- une étape de décompression réalisant une décompression de l'au moins une image de contrôle compressée reçue par l'au moins un appareil maître.

Dans ce cas, l'image de contrôle transmise à l'appareil maître est dans ce cas l'image de contrôle compressée.

De préférence, l'au moins une transmission entre l'au moins un appareil maître et l'au moins un appareil esclave est une transmission sans fil.
De préférence, au moins une transmission est sécurisée. Cela peut permettre d'empêcher une connexion non désirée par un appareil tiers à l'un et/ou l'autre des appareils maître et esclaves.
Dans une version avantageuse de l'invention, les appareils maîtres et esclave peuvent être tous deux connectés à un même réseau, par exemple un réseau local, un tel réseau pouvant être sans fil tel qu'un réseau de type WiFi. Dans ce cas, les échanges de données entre l'appareil maître et l'appareil esclave peuvent être réalisés au travers de ce réseau.

Selon un autre aspect de l'invention, il est proposé un système comprenant :
- au moins un appareil, dit esclave ;
- au moins un appareil, dit maître, comprenant une interface utilisateur tactile ; et
- au moins un dispositif de contrôle tel qu'exposé précédemment pour contrôler ledit au moins un appareil esclave par ledit au moins un appareil maître.

Les premiers moyens de transmission, et les moyens de traitement de l'au moins un dispositif de contrôle peuvent être intégrés à l'au moins un appareil esclave.

Ces moyens peuvent par ailleurs se présenter sous la forme de modules reliés à l'appareil esclave.

Les moyens de détermination et les deuxième et troisième moyens de transmissions de l'au moins un dispositif de contrôle sont intégrés à l'au moins un appareil maître.
Ces moyens peuvent par ailleurs se présenter sous la forme de modules reliés à l'appareil maître.

De préférence, l'au moins un appareil esclave comprend des moyens pour exécuter un système d'exploitation pour tablettes numériques de sorte que l'appareil maître contrôle un système d'exploitation tactile. Dans ce cas, l'appareil esclave est vu par l'appareil maître comme un appareil à interface tactile.

Le dispositif esclave peut en outre comprendre un écran tactile pour afficher l'interface utilisateur tactile.

De préférence, l'au moins un dispositif esclave et/ou au moins un dispositif maître est une tablette numérique à écran tactile.

Le dispositif maître peut aussi être un téléphone portable à écran tactile.

### Description des figures et modes de réalisation

D'autres avantages et particularités de l'invention apparaîtront à la lecture de la description détaillée de mises en oeuvre et d'un mode de réalisation nullement limitatif, et des dessins annexés suivants :
- la figure 1 est une représentation schématique d'un premier mode de réalisation d'un système selon l'invention ;
- la figure 2 est une représentation schématique d'un deuxième mode de réalisation d'un système selon l'invention ;
- la figure 3 est une représentation schématique d'un troisième mode de réalisation d'un système selon l'invention ;
- la figure 4 est une représentation schématique d'un quatrième mode de réalisation d'un système selon l'invention ;
- la figure 5 est une représentation sous la forme d'un diagramme d'un procédé selon l'invention ; et
- la figure 6 est une représentation schématique d'une configuration d'utilisation d'un système selon l'invention.

Sur les figures un élément apparaissant sur plusieurs figures conserve la même référence.

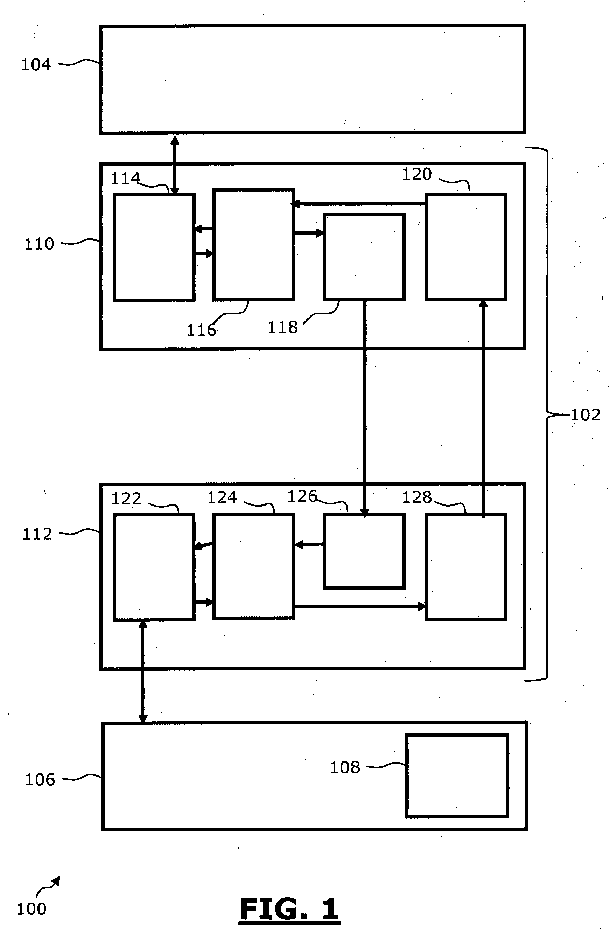

La figure 1 est une représentation schématique d'un premier mode de réalisation d'un système selon l'invention.

Le système 100, représenté sur la figure 1, comprend un dispositif de contrôle 102, un appareil esclave 104 et un appareil maître 106 comprenant une interface tactile 108 utilisée pour commander l'appareil esclave 104 par l'intermédiaire du dispositif de contrôle 102.

Le dispositif 102, représenté sur la figure 1, comprend un premier module 110, dit esclave, du côté de l'appareil esclave 104, et un deuxième module 112, dit maître, du côté de l'appareil maître 106.

Le module esclave 110 comprend :
- un module 114 de communication avec l'appareil esclave 104, permettant d'envoyer et de recevoir des données vers/de l'appareil esclave 104,
- un module de traitement 116,
- un module d'envoi de données 118 vers le module maître 112, et
- un module de réception de données 120 envoyées par le module maître 112.

Le module maître 112 comprend :
- un module 122 de communication avec l'appareil maître 106, permettant d'envoyer et de recevoir des données vers/de l'appareil maître 106,
- un module de traitement et de calcul 124,
- un module de réception de données 126 envoyées par le module esclave 110, et
- un module d'envoi de données 128 vers le module esclave 110.

Une image de contrôle est transmise par l'appareil esclave 104 au module de communication 114 du module esclave 110. Cette image de contrôle est transmise au module de traitement 116 du module esclave 110. L'image de contrôle est traitée par ce module qui réalise :
- un sous-échantillonnage de l'image de contrôle pour diminuer sa taille,
- une compression de l'image de contrôle, et
- éventuellement tout autre traitement désiré.

L'image de contrôle ainsi traitée est transmise au module d'envoi de données 118 vers le module maître 112, qui l'envoie au module maître 112.

Le module de réception de données 126 du module maître 112 reçoit cette image de contrôle et la transfère au module de traitement et de calcul 124. L'image de contrôle préalablement compressée est décompressée par le module de traitement et de calcul 124 et subit tout autre traitement désiré et réalisé par ce module de traitement et de calcul 124.
L'image de contrôle traitée est communiquée au module de communication 122 qui la transfère à l'appareil maître 106 pour affichage par l'interface tactile 108.
L'appareil maître 106 affiche l'image de contrôle pour une sélection tactile sur cette image de contrôle.
Lorsqu'une sélection tactile est réalisée par un utilisateur sur l'interface tactile 108 de l'appareil maître 106, les données de cette sélection tactile sont transmises par l'appareil maître 106 au module maître 112 par l'intermédiaire du module de communication 122 du module maître 112. Les données de sélection sont envoyées au module de traitement et de calcul 124 qui détermine la ou les coordonnées de cette sélection tactile.

La ou les coordonnées déterminées sont ensuite envoyées au module esclave 110 par l'intermédiaire du module d'envoi de données 128 vers le module esclave 110.
Le module esclave reçoit la ou les coordonnées par l'intermédiaire du module de réception de données 120 envoyées par le module maître 112. La ou les coordonnées sont interprétées par le module de traitement 116 du module esclave 110 pour déterminer une fonction associée à la sélection tactile réalisée par rapport à l'image de contrôle.
La fonction déterminée est ensuite transmise à l'appareil esclave 104 par l'intermédiaire du module de communication 114 avec l'appareil esclave 104.
L'appareil esclave 104 réalise ensuite cette fonction.
Ainsi, l'appareil esclave 104 est contrôlé par l'appareil maître 106.

En plus d'une ou des coordonnées de sélection, la valeur d'une ou plusieurs grandeurs physiques, mesurées par un ou plusieurs capteurs (non représentés) de l'appareil maître 106 peuvent également être transmises au module esclave 110 par le module maître 112, de la même manière que la ou les coordonnées d'une sélection tactile.

L'image de contrôle peut être une image se trouvant dans une mémoire graphique ou une mémoire d'affichage ou encore une carte graphique de l'appareil esclave qui est communiquée au module esclave soit une image générée par module (non représenté) de capture d'écran situé dans l'appareil esclave ou dans le module esclave. Dans ce dernier cas, c'est le module de capture d'écran qui génère l'image de contrôle par une capture d'écran de l'appareil esclave.

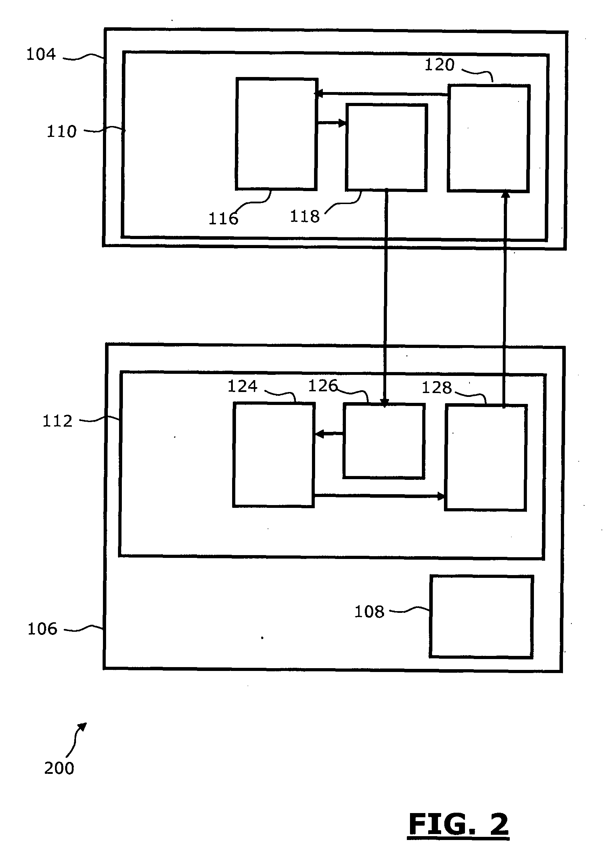

La figure 2 est une représentation schématique d'un deuxième mode de réalisation d'un système selon l'invention.
Dans le système 200, représenté sur la figure 2, le module esclave 110 est intégré dans l'appareil esclave 104, et le module maître 112 est intégré dans l'appareil maître 106.

Dans ce mode de réalisation, le module esclave 110 ne comprend pas de module de communication avec l'appareil esclave 104 puisqu'il est intégré dans l'appareil esclave 104 et le module maître 112 ne comprend pas de module de communication avec l'appareil maître 106 puisqu'il est intégré dans l'appareil maître 112.

Dans ce mode de réalisation, chaque module du dispositif selon l'invention peut être un module logiciel ou un module électronique utilisant des moyens de calcul tels qu'un calculateur ou un processeur, déjà présent sur l'appareil esclave ou l'appareil maître.
De plus, les modules d'envoi et de réception de données, pris seuls, peuvent être des modules existants au sein de l'appareil esclave ou l'appareil maître et qui sont agencés pour réaliser les opérations désirées.

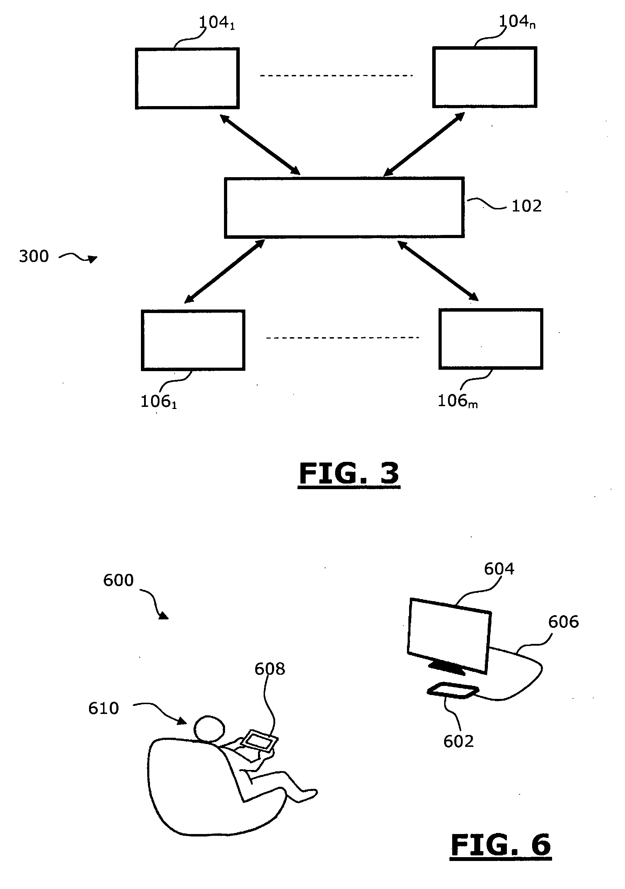

La figure 3 est un autre mode de réalisation d'un système selon l'invention. Dans le système 300 représenté sur la figure 3, un dispositif de contrôle 102 est utilisé pour contrôler un ou plusieurs appareils esclaves 1041-104n par un ou plusieurs appareils maîtres 1061-106m avec n et m des entiers positifs non nuls.
De manière évidente, le dispositif de contrôle 102 pourrait comprendre plusieurs modules esclaves 1101-110n respectivement affectés aux appareils esclaves 1041-104n. Par ailleurs, ou en combinaison avec ce qui précède dans ce paragraphe, le dispositif de contrôle 102 pourrait aussi comprendre plusieurs modules maîtres 1121-112m respectivement affectés aux appareils maîtres 1061-106m.

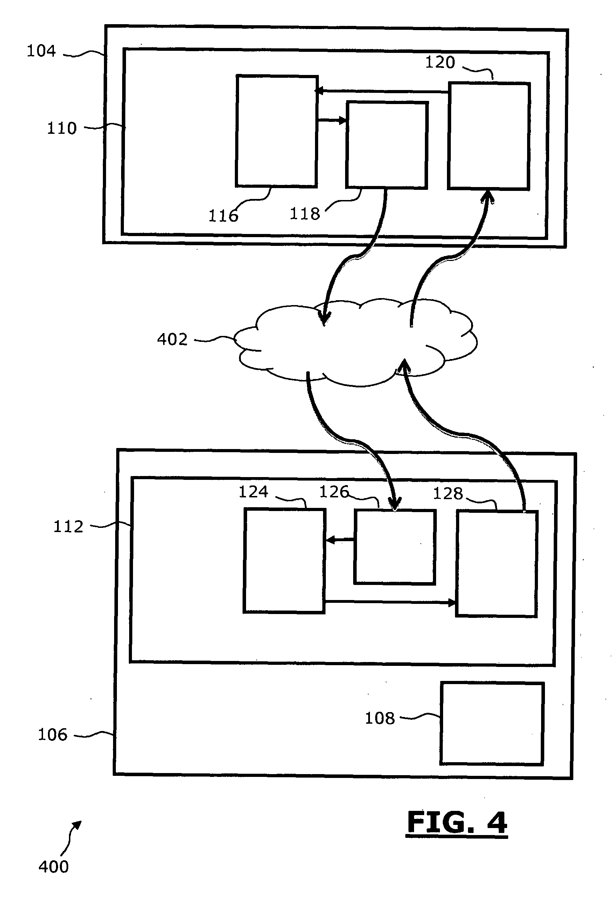

La figure 4 est une représentation schématique d'un quatrième mode de réalisation d'un système selon l'invention.
La figure 4 est constituée des mêmes éléments que la figure 2 à la différence que dans le système 400 représenté sur la figure 4, un réseau de communication 402 est utilisé pour transmettre, c'est à dire recevoir et émettre, des données provenant de l'un des appareils vers l'autre.
Le mode de réalisation 400 est le mode de réalisation préféré de l'invention.

Ce réseau informatique est un réseau sans-fil. Il peut comporter un ou plusieurs routeurs sans fils.
Le réseau de communication pourrait être filaire et comporter un ou plusieurs routeurs filaires. Il pourrait aussi être un mélange de routeurs sans fils et filaires.
Dans un mode de réalisation préféré, le réseau de communication est un réseau local, tel qu'un réseau domestique ou un réseau d'entreprise.
Le réseau de communication peut également être un réseau global, de type internet.

Bien entendu, le réseau informatique 402 pourrait également être introduit et utilisé dans tous les modes de réalisation d'un système selon l'invention précédemment décrit.

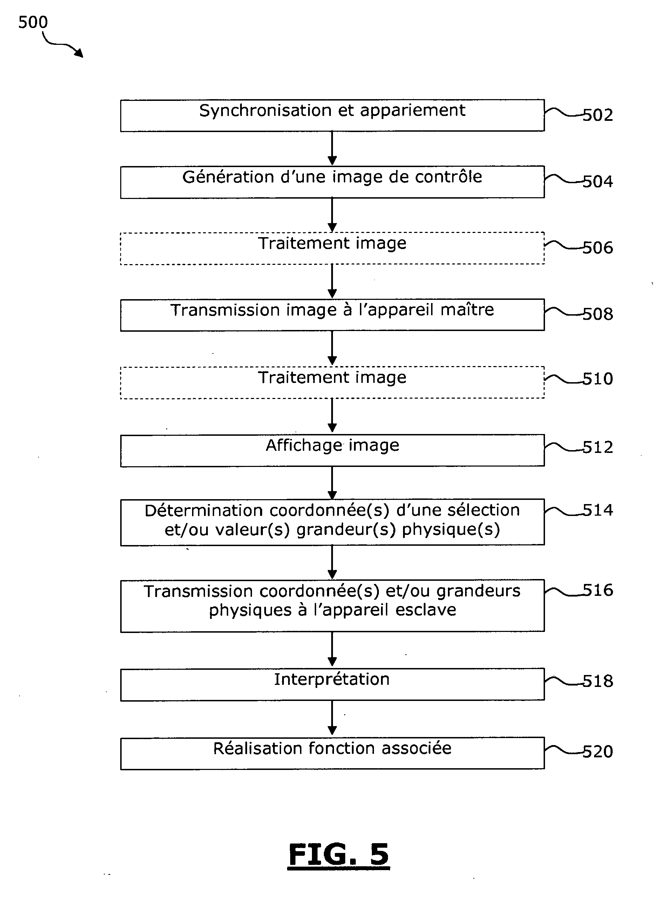

Nous allons maintenant décrire un exemple de procédé selon l'invention en référence à la figure 5.
Le procédé 500 représenté en figure 5, comprend une première étape 502 de synchronisation et d'appariement des appareils maître et esclave et l'établissement d'une connexion sécurisée.
Une fois la connexion établie, le procédé 500 comprend une étape de génération d'une image de contrôle à l'étape 504.
Cette image est générée soit en réalisant une capture d'écran de l'appareil maître soit communiquée par l'appareil esclave depuis une mémoire d'affichage ou une carte graphique.
L'image de contrôle est éventuellement traitée à l'étape 506. Le traitement peut comprendre, une compression et/ou un sous-échantillonnage ou une mise à l'échelle. Cette étape 506 est une étape optionnelle.
L'image de contrôle est ensuite envoyée à l'appareil maître à l'étape 508. L'image de contrôle reçue est décompressée ou remise à l'échelle à l'étape 510 pour la décompresser si une telle compression a été réalisée lors de l'étape optionnelle 506.
L'appareil maître affiche l'image de contrôle à l'étape 512.

Suite à une sélection tactile réalisée sur l'interface tactile de l'appareil maître par rapport à l'image de contrôle affichée, la ou les coordonnées de la sélection sont déterminées ainsi qu'une ou plusieurs valeurs d'un ou plusieurs paramètres physiques tels que la vitesse de sélection, l'angle de l'appareil maître dans une direction donnée, la puissance de l'appui pour la sélection tactile, etc. à l'étape 514.
La ou les coordonnées et éventuellement le ou les paramètres physiques sont transmis à l'appareil esclave à l'étape 516.
L'appareil esclave réalise une interprétation de la ou des coordonnée(s) et éventuellement du ou des paramètre(s) reçus pour identifier la (les) fonction(s) associée(s) à la sélection tactile et éventuellement au(x) paramètre(s) physique(s) à l'étape 518.

A l'étape 520 la (les) fonction(s) identifiée(s) est (sont) exécutée(s) par l'appareil esclave.

Les étapes 504 à 512 sont réalisées avec une fréquence prédéterminée, telle que par exemple 5 fois par seconde.
Les étapes 514 à 520 sont réalisées suite à chaque sélection tactile réalisée au niveau de l'appareil maître.

Le procédé 500 est initié à la demande d'un utilisateur par sélection d'une fonction d'appariement au niveau de l'appareil maître ou de l'appareil esclave. Le choix de l'autre appareil peut être réalisé manuellement ou par une sélection de l'autre appareil dans un menu affiché sur le premier appareil.

La figure 6 est une représentation schématique d'une configuration 600 mettant en oeuvre un système selon l'invention conformément au mode de réalisation de la figure 2.

Dans la configuration 600 représentée sur la figure 5, l'appareil esclave est une tablette 602 connectée à une télévision 604 par un câble HDMI 606 et l'appareil maître est un appareil à écran tactile 608.
La tablette 602 est une tablette à écran tactile utilisant la plateforme applicative Android disposant d'une sortie HDMI permettant de la connecter à une télévision. Un exemple de tablette de ce type est une tablette ARCHOS 10.1 internet tablet. Cette tablette a un écran tactile de 10.1" d'une résolution de 1024x600 pixels. La tablette pourrait utiliser une autre plateforme applicative reposant sur un paradigme d'interface utilisateur tactile.
L'appareil à écran tactile 608 est un téléphone mobile de type smart phone par exemple un iPhone de Apple ou un téléphone utilisant la plateforme Android comme par exemple le téléphone Google Nexus One. L'appareil peut également être une autre tablette. Dans le cas du téléphone Google Nexus One, l'appareil a un écran tactile de dimension 3,7" et une résolution de 800x480 pixels.
Un utilisateur 610 regarde le contenu affiché sur la télévision depuis une certaine distance, typiquement 2 à 4 mètres, qui est la distance typique à laquelle est assis un téléspectateur. L'utilisateur tient entre ses mains l'appareil à écran tactile 608.
La tablette 602, connectée à la télévision 604, dispose d'une interface de communication sans fil par exemple selon l'un des standards WiFi (IEEE 802.11) ou BlueTooth (802.15.1-3). L'appareil 608 se trouvant dans les mains de l'utilisateur dispose d'une interface de communication sans fil qui peut communiquer selon le même standard que celui de la tablette 602.
La tablette 602, de par l'utilisation de la plateforme Android, est basée sur un paradigme d'interface utilisateur reposant sur différents capteurs, principalement l'écran tactile, mais également des accéléromètres, gyroscopes et compas. Ce paradigme se distingue de celui de la souris d'ordinateur par le fait que l'interaction se fait directement à l'écran où l'utilisateur va toucher directement la surface de l'écran pour déclencher des actions. Dans le paradigme souris d'ordinateur, l'utilisateur déplace une souris sur une surface distincte de l'écran. Ce déplacement est matérialisé à l'écran par un curseur qui vient se superposer sur l'écran. Lorsque le curseur se trouve à l'endroit désiré, l'utilisateur peut déclencher une action en cliquant.
Par ailleurs, l'utilisation de la plateforme Android permet à l'utilisateur d'installer sur l'appareil esclave un grand nombre d'applications développées par un écosystème actif de développeurs. Ces applications sont conçues pour utiliser le paradigme particulier d'interface utilisateur.
Lorsque l'utilisateur se trouve à distance de la tablette 602, il ne peut pas interagir avec les applications selon le paradigme prévu. L'invention permet cette interaction au travers de l'appareil 608.
L'appareil 608 est dans les mains de l'utilisateur. Dans la mesure où il possède les mêmes capteurs que l'appareil esclave, il va pouvoir être utilisé, par procuration, comme télécommande pour la tablette 602.
Dans la configuration 600 représentée sur la figure 5, le dispositif de contrôle consiste en des logiciels, logiciel maître et logiciel esclave, exécutés par l'appareil 608 qui est l'appareil maître et par la tablette 602 qui est l'appareil esclave. Ces logiciels assurent l'appariement de la tablette 602 et de l'appareil 608 selon un protocole d'appariement prédéterminé, la communication bidirectionnelle entre les deux appareils ainsi que la capture des actions de l'utilisateur sur l'appareil 608 et la restitution de ces actions sur la tablette 602. Le logiciel esclave est exécuté en tâche de fond.

Selon l'invention, les appareils maîtres et esclave peuvent être tous deux connectés à un même réseau, par exemple local, un tel réseau pouvant être sans fil tel qu'un réseau de type WiFi.
Le logiciel esclave est exécuté sur l'appareil esclave soit automatiquement au démarrage de l'appareil, soit automatiquement lorsque l'appareil est connecté à la TV par la liaison HDMI soit manuellement par l'utilisateur.
Le logiciel maître dédié est exécuté sur l'appareil maître manuellement par l'utilisateur. L'utilisateur sélectionne dans un menu du logiciel maître le mode d'appariement. Le logiciel va rechercher sur le réseau local WiFi les appareils esclaves disponibles et afficher leur nom dans une liste. L'utilisateur sélectionne alors l'appareil esclave qu'il veut contrôler. Le logiciel maître demande à l'utilisateur d'entrer un mot de passe. Puis il entre en communication avec le logiciel esclave de l'appareil esclave choisi pour lui signifier qu'un appareil maître cherche à s'apparier avec lui et lui fournit le mot de passe. Le logiciel esclave reçoit le mot de passe et demande à l'utilisateur d'entrer le mot de passe. Si le mot de passe entré par l'utilisateur est identique au mot de passe communiqué par l'appareil maître alors l'appariement est effectué. Il est évident que d'autres modes d'échange de mot de passe peuvent exister, comme par exemple une communication du mot de passe de l'esclave vers le maître, un cryptage du mot de passe etc. Lorsque l'appariement est effectif, une notification visuelle de l'appariement est affichée par l'appareil esclave sur l'écran de la TV.

Dans un premier mode d'utilisation, le logiciel maître affiche des contrôles (boutons) sur l'écran de l'appareil maître. Ces bouton reprennent les boutons standards de l'interface Android, c'est-à-dire : « Home » ; « Back » ; « Search » ; « Menu » ; « Up » ; « Down » ; « Left » ; « Right » ; « Select ». Lorsque l'utilisateur presse un de ces boutons, le logiciel maître communique cet évènement au logiciel esclave. Le logiciel esclave déclenche l'évènement Android correspondant dans l'appareil esclave. Le système d'exploitation de l'appareil esclave est ainsi stimulé comme si un utilisateur avait pressé le bouton correspondant de l'appareil esclave.
Dans un second mode d'utilisation, on cherche à avoir un contrôle plus fin de l'appareil esclave par l'appareil maître notamment lorsque l'application exécutée sur l'appareil esclave ne peut pas être contrôlée par les 9 boutons standards d'Android. C'est le cas de nombre de jeux, de logiciels de lecture de contenus multimédia, de navigateur Internet. Dans ces applications, un contrôle par l'interface tactile est nécessaire.
Dans ce second mode d'opération, le logiciel esclave capture la mémoire d'écran (frame buffer) de l'appareil esclave. Cette image est envoyée au logiciel maître qui l'affiche sur l'écran de l'appareil maître. Ces opérations sont effectuées périodiquement à une fréquence de 5 captures d'écran par seconde.
L'utilisateur peut ainsi visualiser sur l'écran de l'appareil maître une copie de l'écran de l'appareil esclave. Il a ainsi une représentation de l'interface utilisateur de l'appareil esclave sur l'écran de l'appareil maître et est guidé dans l'interaction tactile. Le logiciel maître détecte tous les évènements tactiles effectués par l'utilisateur sur l'écran de l'appareil maître et les communique au logiciel esclave. Le logiciel esclave déclenche les évènements Android correspondant dans l'appareil esclave. Le système d'exploitation de l'appareil esclave est ainsi stimulé comme si un utilisateur avait effectué les mêmes évènements tactiles sur l'écran de l'appareil esclave.
Une adaptation de l'image capturée sur l'appareil esclave peut être effectuée lorsque les résolutions d'écran ne sont pas nécessairement identiques entre les deux appareils. Par ailleurs, le mode de transmission peut inclure des mécanismes de réduction de la bande passante dans le canal de communication. Ces mécanismes peuvent être : un sous échantillonnage temporel et/ou spatial de l'image, une compression de l'image (par exemple JPEG ou PNG), une transmission des différences entre images successives associée à une quantification et codage de type arithmétique ou « run-length » (RLE) etc...
Par ailleurs, il peut être désirable de réserver une partie de l'écran de l'appareil maître pour disposer des boutons de contrôle comme par exemple les boutons de contrôle standards d'Android. La zone d'affichage de l'image capturée sera alors plus petite que la surface de l'écran de l'appareil maître. Dans les deux modes de fonctionnement décrit ci-dessus, il peut être envisagé que le logiciel maître détecte les évènements lié aux autres capteurs de l'appareil maître (accéléromètres ; gyroscope, compas, ...), les transmette au logiciel esclave qui à son tour déclenche les évènements Android correspondant dans l'appareil esclave. Le système d'exploitation de l'appareil esclave est ainsi stimulé comme si un utilisateur avait effectué les mêmes évènements tactiles sur l'appareil esclave.

Dans une implémentation différente, l'appareil esclave peut être une télévision interactive ou de façon équivalente un appareil sans écran connecté à une TV. Un exemple d'un tel appareil est une set-top-box ou un TV Cam. Dans cette implémentation l'appareil esclave utilise la plateforme applicative Android, ou de façon générale une autre plateforme applicative reposant sur un paradigme d'interface utilisateur tactile.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif pour contrôler au moins un appareil, dit esclave, par au moins un appareil, dit maître, comprenant une interface utilisateur tactile, ledit dispositif comprenant:
- des premiers moyens de transmission d'au moins une image, dite de contrôle, générée par l'au moins un appareil esclave audit au moins un appareil maître pour affichage de l'au moins une image de contrôle sur ledit au moins un appareil maître ;
et étant **caractérisé en ce qu'**il comprend:
- des deuxièmes moyens de transmission, dudit au moins un appareil maître vers ledit au moins un appareil esclave, d'au moins une coordonnée d'au moins une sélection tactile réalisée sur ledit au moins un appareil maître par rapport audit au moins une image de contrôle; et
- des moyens de traitement pour interpréter ladite au moins une sélection tactile au niveau dudit au moins un appareil esclave en fonction de ladite au moins une coordonnée
et **en ce que** l'image de contrôle comprend une image générée par l'au moins un appareil esclave pour affichage par ledit au moins un appareil maître et **en ce que** l'image est générée par une copie d'une mémoire de l'appareil esclave.

2. Dispositif selon la revendication 1, dans lequel la mémoire est une mémoire graphique ou une mémoire d'une carte graphique.

3. Dispositif selon les revendications 1 ou 2, le dispositif étant configuré pour que l'image de contrôle ne soit pas affichée par l'appareil esclave.

4. Dispositif selon l'une quelconque des revendications précédentes, comprenant en outre:
- des troisièmes moyens de transmission de l'au moins un appareil maître à l'au moins un appareil esclave d'au moins une grandeur physique déterminée par un capteur de l'appareil maître ; et
- des moyens de traitement pour interpréter ladite au moins une grandeur physique au niveau dudit au moins un appareil esclave.

5. Dispositif selon l'une quelconque des revendications précédentes, dans lequel ladite au moins une image de contrôle comprend une représentation visuelle d'au moins une fonction accessible sur l'au moins un appareil esclave de manière non tactile.

6. Dispositif selon l'une quelconque des revendications précédentes, comprenant en outre des moyens de traitement d'image réalisant un traitement de l'au moins une image de contrôle avant transmission audit au moins un appareil maître.

7. Procédé de contrôle d'au moins un appareil, dit esclave, par au moins un appareil, dit maître, comprenant une interface utilisateur tactile, ledit procédé comprenant les étapes suivantes :
- transmission d'au moins une image, dite de contrôle, générée par l'au moins un appareil esclave audit au moins un appareil maître pour affichage de l'au moins une image de contrôle sur ledit au moins un appareil maître,
- transmission dudit au moins un appareil maître audit au moins un appareil esclave, d'au moins une coordonnée d'au moins une sélection tactile réalisée sur ledit au moins un appareil maître par rapport à l'au moins une image de contrôle,
- traitement de ladite au moins une sélection au niveau dudit au moins un appareil esclave en fonction de ladite au moins une coordonnée, et dans lequel au moins une image de contrôle comprend une image générée par l'au moins un appareil esclave pour affichage par ledit au moins un appareil maître et **en ce que** l'image est générée par une copie d'une mémoire de l'appareil esclave.

8. Procédé selon la revendication 7, comprenant en outre une étape de transmission de l'au moins un appareil maître vers l'au moins un appareil esclave d'au moins une grandeur physique captée par un capteur de l'au moins un appareil maître et une étape de traitement pour interpréter ladite au moins une grandeur physique au niveau dudit au moins un appareil esclave.

9. Procédé selon l'une quelconque des revendications 7 ou 8, dans lequel l'au moins une image de contrôle comprend une représentation visuelle d'au moins une fonction accessible sur l'appareil esclave de manière non tactile.

10. Procédé selon l'une des revendications 7 à 9, dans lequel les étapes de :
- transmission de l'au moins une image de contrôle de l'au moins un appareil esclave vers l'appareil maître, et
- d'affichage de ladite au moins une image de contrôle sur l'appareil maître sont réalisées selon une périodicité prédéterminée.

11. Procédé selon la revendication 10, comprenant en outre une étape de traitement d'image réalisant un traitement d'image de l'au moins une image de contrôle avant l'étape de transmission de ladite image de contrôle audit au moins un appareil maître.

12. Système comprenant :
- au moins un appareil, dit esclave ;
- au moins un appareil, dit maître, comprenant une interface utilisateur tactile ; et
- au moins un dispositif de contrôle selon l'une quelconque des revendications 1 à 6 pour contrôler ledit au moins un appareil esclave par ledit au moins un appareil maître.

13. Système selon la revendication 12, dans lequel l'au moins un appareil esclave comprend des moyens pour exécuter un système d'exploitation pour tablettes numériques de sorte que l'appareil maître contrôle un système d'exploitation tactile.

14. Système selon la revendication 13, dans lequel l'au moins un dispositif esclave comprend en outre un écran pour afficher l'interface utilisateur tactile.

15. Système selon l'une quelconque des revendications 12 à 14, dans lequel l'au moins un dispositif esclave et/ou l'au moins un dispositif maître est une tablette numérique.

## Patentansprüche

1. Vorrichtung zur Kontrolle mindestens eines so genannten Slave-Geräts durch mindestens ein so genanntes Master-Gerät, eine berührungsempfindliche Benutzerschnittstelle umfassend, wobei die Vorrichtung umfasst:
- erste Einrichtungen für die Übertragung mindestens eines so genannten Kontrollbilds, das durch das mindestens eine Slave-Gerät erzeugt wird, an das mindestens eine Master-Gerät zur Anzeige des wenigstens einen Kontrollbilds auf dem mindestens einen Master-Gerät; und **dadurch gekennzeichnet ist, dass** sie umfasst:
- zweite Einrichtungen für die Übertragung, von dem mindestens einen Master-Gerät an das mindestens eine Slave-Gerät, mindestens einer Koordinate aus mindestens einer berührungsempfindlichen Selektion, die auf dem mindestens einen Master-Gerät angesichts des mindestens einen Kontrollbilds vorgenommen wird, und
- Verarbeitungseinrichtungen zur Auswertung der mindestens einen berührungsempfindlichen Selektion an dem mindestens einen Slave-Gerät der mindestens einen Koordinate entsprechend.
und dadurch, dass das Kontrollbild ein durch das mindestens eine Slave-Gerät erzeugtes Bild zur Anzeige durch das wenigstens eine Master-Gerät umfasst, und dadurch, dass das Bild durch eine Kopie eines Speichers des Slave-Geräts erzeugt wird.

2. Vorrichtung nach Anspruch 1, in der es sich bei dem Speicher um einen Grafikspeicher oder um einen Speicher einer Grafikkarte handelt.

3. Vorrichtung nach den Ansprüchen 1 oder 2, wobei die Vorrichtung derart ausgebildet ist, dass das Kontrollbild nicht durch das Slave-Gerät angezeigt wird.

4. Vorrichtung nach einem der vorhergehenden Ansprüche, außerdem umfassend:
- dritte Übertragungseinrichtungen, von dem wenigstens einen Master-Gerät an das wenigstens eine Slave-Gerät, mindestens eines physikalischen, durch einen Sensor des Master-Geräts bestimmten Werts; sowie
- Verarbeitungseinrichtungen zur Auswertung des wenigstens einen physikalischen Werts an dem mindestens einen Slave-Gerät.

5. Vorrichtung nach einem der vorhergehenden Ansprüche, in der das mindestens eine Kontrollbild eine visuelle Darstellung mindestens einer Funktion enthält, auf die auf dem mindestens einen Slave-Gerät auf nicht berührungsempfindlicher Weise zugegriffen wird.

6. Vorrichtung nach einem der vorhergehenden Ansprüche, wobei sie außerdem Bildbearbeitungseinrichtungen umfasst, welche die Bearbeitung des wenigstens einen Kontrollbilds vor der Übertragung an das mindestens eine Master-Gerät ausführen.

7. Verfahren zur Kontrolle mindestens eines so genannten Slave-Geräts durch mindestens ein so genanntes Master-Gerät, eine berührungsempfindliche Benutzerschnittstelle umfassend, wobei das Verfahren folgende Schritte umfasst:
- Übertragung mindestens eines so genannten Kontrollbilds, das durch das mindestens eine Slave-Gerät erzeugt wird, an das mindestens eine Master-Gerät zur Anzeige des wenigstens einen Kontrollbilds auf dem mindestens einen Master-Gerät,
- Übertragung, von dem mindestens einen Master-Gerät an das mindestens eine Slave-Gerät, mindestens einer Koordinate aus mindestens einer berührungsempfindlichen Selektion, die auf dem mindestens einen Master-Gerät angesichts des mindestens einen Kontrollbilds vorgenommen wird,
- Verarbeitung der mindestens einen Selektion an dem mindestens einen Slave-Gerät der mindestens einen Koordinate entsprechend,
und in dem wenigstens ein Kontrollbild ein durch das mindestens eine Slave-Gerät erzeugtes Bild zur Anzeige durch das wenigstens eine Master-Gerät umfasst und das Bild durch eine Kopie eines Speichers des Slave-Geräts erzeugt wird.

8. Verfahren nach Anspruch 7, das außerdem einen Übertragungsschritt, von dem wenigstens einen Master-Gerät an das wenigstens eine Slave-Gerät, wenigstens eines physikalischen, durch einen Sensor des mindestens einen Master-Geräts erfassten Werts sowie einen Verarbeitungsschritt zur Auswertung des wenigstens einen physikalischen Werts an dem mindestens einen Slave-Gerät umfasst.

9. Verfahren nach einem der Ansprüche 7 oder 8, in dem das mindestens eine Kontrollbild eine visuelle Darstellung mindestens einer Funktion enthält, auf die auf dem Slave-Gerät auf nicht berührungsempfindlicher Weise zugegriffen wird.

10. Verfahren nach einem der Ansprüche 7 bis 9, in dem die Schritte für:
- die Übertragung des mindestens einen Kontrollbilds von dem mindestens einen Slave-Gerät an das Master-Gerät und
- die Anzeige des wenigstens einen Kontrollbilds auf das Master-Gerät einer vorbestimmten Periodizität entsprechend ausgeführt werden.

11. Verfahren nach Anspruch 10, das außerdem einen Bildbearbeitungsschritt für die Bildbearbeitung des wenigstens einen Kontrollbilds vor dem Übertragungsschritt des Kontrollbilds an das wenigstens eine Master-Gerät umfasst.

12. System, enthaltend:
- mindestens ein so genanntes Slave-Gerät;
- mindestens ein so genanntes Master-Gerät, das eine berührungsempfindliche Benutzerschnittstelle umfasst; und
- mindestens eine Kontrollvorrichtung nach einem der Ansprüche 1 bis 6 zur Kontrolle des mindestens einen Slave-Geräts durch das mindestens eine Master-Gerät.

13. System nach Anspruch 12, in dem das wenigstens eine Slave-Gerät Einrichtungen zur Ausführung eines Betriebssystems für Tablet-Computer umfasst, sodass das Master-Gerät ein berührungsempfindliches Betriebssystem kontrolliert.

14. System nach Anspruch 13, in dem die wenigstens eine Slave-Vorrichtung außerdem einen Bildschirm zur Anzeige der berührungsempfindlichen Benutzerschnittstelle umfasst.

15. System nach einem der Ansprüche 12 bis 14, in dem es sich bei der wenigstens einen Slave-Vorrichtung und/oder bei der mindestens einen Master-Vorrichtung um ein Tablet-Computer handelt.

## Claims

1. Device for controlling at least one so-called slave apparatus, by at least one so-called master apparatus, comprising a tactile user interface, said device comprising:
- first means for transmitting at least one so-called controlled image, generated by the at least one slave apparatus to said at least one master apparatus for displaying the at least one controlled image on said at least one master apparatus;
said device being **characterised in that** it comprises:
- second means for transmitting, from said at least one master apparatus to said at least one slave apparatus, at least one coordinate of at least one tactile selection performed on said at least one master apparatus with respect to said at least one controlled image; and
- processing means for interpreting said at least one tactile selection at said at least one slave apparatus as a function of said at least one coordinate
and **in that** the controlled image comprises an image generated by the at least one slave apparatus for displaying by said at least one master apparatus, and **in that** said image is generated by a copy of a memory of the slave apparatus.

2. Device according to claim 1, wherein the memory is a graphics memory or a memory of a graphics board.

3. Device according to claim 1 or 2, the device being configured for not displaying the controlled image by the slave apparatus.

4. The device according to any of the preceding claims, further comprising:
- third means for transmitting from the at least one master apparatus to the at least one slave apparatus, at least one physical quantity determined by a sensor of the master apparatus; and
- processing means for interpreting said at least one physical quantity at said at least one slave apparatus.

5. The device according to any of the preceding claims, wherein said at least one controlled image comprises a visual representation of at least one function accessible on the at least slave apparatus non tactually.

6. The device according to any of the preceding claims, further comprising image processing means performing a processing of the at least one controlled image before transmission to the at least one master apparatus.

7. A method for controlling at least one so-called slave apparatus, by at least one so-called master apparatus, comprising a tactile user interface, said method comprising the following step:
- transmitting at least one so-called controlled image, generated by the at least one slave apparatus to said at least one master apparatus for displaying the at least one controlled image on said at least one master apparatus;
said method being **characterised in that** it comprises the following steps:
- transmitting from the at least one master apparatus to said at least one slave apparatus, at least one coordinate of at least one tactile selection performed on said at least one master apparatus with respect to the at least one controlled image;
- processing said at least one selection at said at least one slave apparatus as a function of said at least one coordinate,
and wherein the at least one controlled image comprises an image generated by the at least one slave apparatus for displaying by said at least one master apparatus, and **in that** said image is generated by a copy of a memory of the slave apparatus.

8. The method according to claim 7, further comprising a step of transmitting from said at least one master apparatus to said at least one slave apparatus at least one physical quantity sensed by a sensor of the at least one master apparatus and a step of processing for interpreting said at least one physical quantity at said at least one slave apparatus.

9. The method according to any of claims 7 or 8, wherein the at least one controlled image comprises a visual representation of at least one function accessible on the slave apparatus non-tactually.

10. The method according to one of claims 7 to 9, **characterised in that** the steps of:
- transmitting the at least one controlled image from the at least one slave apparatus to the master apparatus, and
- displaying said at least one controlled image on the master apparatus are performed according to a predetermined periodicity.

11. The method according to claim 10, further comprising an image processing step performing an image processing of the at least one controlled image before the step of transmitting said controlled image to said at least one master apparatus.

12. A system comprising:
- at least one so-called slave apparatus;
- at least one so-called master apparatus, comprising a tactile user interface; and
- at least one control device according to any of claims 1 to 6 for controlling said at least one slave apparatus by said at least one master apparatus.

13. The system according to claims 12, wherein the at least one slave apparatus comprises means for running an operating system for tablet computers so that the master apparatus controls a tactile operating system.

14. The system according to claim 13, wherein the at least one slave device further comprises a screen for displaying the tactile user interface.

15. The system according to any of claims 12 to 14, wherein the at least one slave device and/or at least one master device is a tablet computer.
